# EUROPEAN PATENT APPLICATION

(11) **EP 4 653 307 A1**
(43) Date of publication of application: **26.11.2025**
(21) Application number: 23946785.5
(22) Date of filing: 03.08.2023
(51) Int. Cl.: B63B 39/04, B63H 21/18, B63J 3/04, G21C 13/10

(54) **NUCLEAR-POWERED SHIP WITH IMPROVED STABILITY**

(30) Priority: 24.07.2023 KR 20230096124
(71) Applicant: Korea Institute of Ocean Science and Technology, Busan 49111 (KR)
(72) Inventor: KANG, Hee Jin, Gyeryong-si, Chungcheongnam-do 32837 (KR); SHIM, Hyung Won, Sejong 30150 (KR); KIM, Young Shik, Daejeon 30150 (KR); HONG, Jang Pyo, Daejeon 34686 (KR); KIM, Yun Ho, Daejeon 34103 (KR); KIM, Hyun Suk, Sejong 30150 (KR)
(74) Representative: EP&C
(86) International application number: PCT/KR2023/011411
(87) International publication number: WO 2025/023359

(57) **Abstract**

The present invention relates to a nuclear-powered ship with improved stability, the ship comprising: a nuclear reactor, disposed inside a hull, for generating steam from thermal energy produced during the nuclear fission process; a turbine installed in the hull and connected to the nuclear reactor, and rotating from the collision and reaction forces of colliding steam; and a rotor disposed inside the hull and rotating about a spin shaft, a gimbal rotatably supporting the spin shaft, and a gyroscopic stabilizer preventing the ship from tilting by means of precessional motion of a frame that rotatably supports the gimbal, wherein the turbine is mounted on the spin shaft of the gyroscopic stabilizer to transmit rotational force thereto, and the gyroscopic stabilizer comprises a generator mounted on the spin shaft, power being generated by the generator activated by the rotation of the spin shaft and rotor by the turbine.

## Description

### Technical Field

The present invention relates to a nuclear-powered ship, and more particularly, to a nuclear-powered ship with improved stability, in which steam generated by a nuclear reactor drives a turbine, and the operation of a gyroscopic stabilizer and a generator installed thereon is carried out by the turbine's drive, thereby not only enhancing hull stability by suppressing tilting of the hull through the gyroscopic stabilizer, but also enabling smooth power supply within the hull through electric power generation by the generator.

### Background Art

In the case of general ships operated by the driving of internal combustion engines, not only is the consumption of fossil fuels significant, but there is also a considerable problem of harmful substances being emitted into the atmosphere, particularly during the combustion of fossil fuels.

To address such problems, a "nuclear-powered ship," as disclosed in Korean Patent Publication No. 10-2015-0006545 and the like, has been proposed.

A nuclear-powered ship obtains propulsion power through the rotation of a shaft system driven by a turbine powered by steam generated in a nuclear reactor. When nuclear fuel is loaded into the reactor, the ship can continue sailing for a long period without the need for refueling. Additionally, since there is no need to install fuel tanks, cargo capacity can be increased, and labor and time required for loading fuel are saved, thereby enhancing operational efficiency.

Meanwhile, since ships undergo six degrees of freedom motion during navigation, various devices such as bilge keels and fin stabilizers are utilized to overcome operational limitations on personnel and equipment caused by excessive ship motions.

However, the use of various devices such as bilge keels and fin stabilizers causes additional propulsion resistance of the ship, and in particular, fin stabilizers have a complex structure that requires continuous maintenance.

For these reasons, gyroscopic stabilizers have recently been applied to ships.

When a gyroscopic stabilizer is applied to a ship, tilting of the hull can be suppressed by the precessional motion of the gyroscopic stabilizer during hull tilt, thereby improving the ship's stability, in other words, its restoring ability.

Furthermore, since the precessional motion of the gyroscopic stabilizer occurs in a different direction from the external forces applied to the ship, it can also reduce the effects of shaking and vibration occurring inside the ship.

However, since the gyroscopic stabilizer consumes a significant amount of electric power, it may cause disruptions in the ship's power supply, and because it occupies a considerable portion of the ship's internal space, it poses a problem of reduced utilization of the internal space.

For the above reasons, efforts have been made in the field to develop a nuclear-powered ship that not only improves the ship's stability but also enables smooth power supply within the ship and enhances the utilization of internal space; however, satisfactory results have not yet been achieved.

### [Prior Art]

### [Patent Documents]

(Patent Document 1) Korean Patent Publication No. 10-2015-0006545

### Technical Problem

The present invention has been proposed to solve the problems of the prior art as described above, and its purpose is to provide a nuclear-powered ship in which steam generated by a nuclear reactor drives a turbine, and the operation of a gyroscopic stabilizer and a generator installed thereon is carried out by the turbine's drive, thereby not only increasing hull stability by suppressing tilting of the hull through the gyroscopic stabilizer but also enabling smooth power supply within the hull through power generation by the generator.

### Technical Solution

To achieve the above object, the present invention proposes,
a nuclear-powered ship with improved stability, comprising; a nuclear reactor disposed inside a hull and configured to generate steam from thermal energy produced during a nuclear fission process; a turbine installed in the hull and connected to the nuclear reactor, the turbine being rotated by an impact force and a reaction force generated when the steam collides therewith; and a gyroscopic stabilizer disposed inside the hull and configured to suppress tilting of the hull by a precessional motion of a frame that rotatably supports a gimbal, the gimbal rotatably supporting a spin shaft, and a rotor rotating about the spin shaft, wherein the turbine is mounted on the spin shaft of the gyroscopic stabilizer to transmit rotational force to the spin shaft, and wherein the gyroscopic stabilizer comprises a generator mounted on the spin shaft, the generator being activated by rotation of the spin shaft and the rotor caused by the turbine to generate electric power.

### Advantageous Effects

The nuclear-powered ship with improved stability according to the present invention comprises not only a nuclear reactor and a turbine but also a gyroscopic stabilizer. In particular, the turbine is mounted on the spin shaft of the gyroscopic stabilizer, so that the rotational force of the turbine, driven by steam generated from the nuclear reactor, is transmitted to the spin shaft of the gyroscopic stabilizer, causing the rotor to rotate and enabling precessional motion. As a result, tilting of the hull can be suppressed, thereby improving the ship's stability.

In addition, the nuclear-powered ship with improved stability according to the present invention comprises a generator mounted on the spin shaft of the gyroscopic stabilizer. As the spin shaft and rotor rotate by the turbine, the generator operates, thereby generating electric power and enabling smooth power supply within the ship.

### Description of Drawings

FIG. 1 is a schematic diagram illustrating the structure of a nuclear-powered ship with improved stability according to the present invention.
FIG. 2 is a schematic diagram illustrating the structure of a gyroscopic stabilizer in the nuclear-powered ship with improved stability according to the present invention.
FIG. 3 is an exemplary diagram illustrating steam inflow from the nuclear reactor to the turbine in the nuclear-powered ship with improved stability according to the present invention.
FIG. 4 is an exemplary diagram illustrating power supply from the generator to the hull propulsion motor in the nuclear-powered ship with improved stability according to the present invention.
FIG. 5 is an exemplary diagram illustrating shielding of the nuclear reactor in the nuclear-powered ship with improved stability according to the present invention.

### Best Mode

Hereinafter, the present invention will be described in detail with reference to the accompanying drawings.

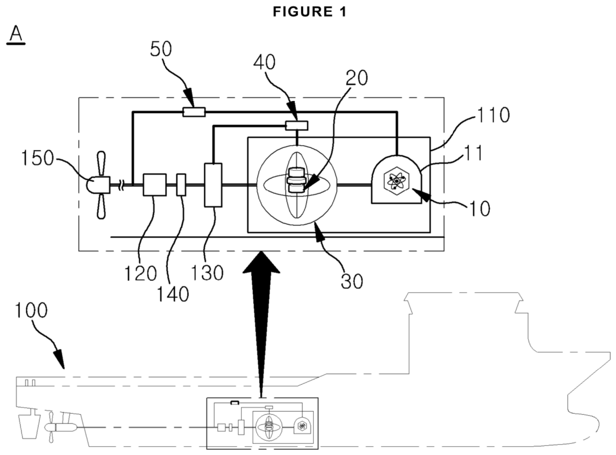

As shown in FIG. 1, the nuclear-powered ship with improved stability according to the present invention (A) comprises a nuclear reactor (10), a turbine (20), and a gyroscopic stabilizer (30).

The nuclear reactor (10) of the present invention is disposed inside the hull (100) and generates steam from thermal energy produced during a nuclear fission process.

The nuclear reactor (10) may be of any conventional structure or type capable of generating steam from thermal energy produced during a nuclear fission process, and thus a detailed description of the nuclear reactor (10) is omitted.

Meanwhile, the nuclear reactor (10) is enclosed by a shielding member (11) to prevent radioactive leakage.

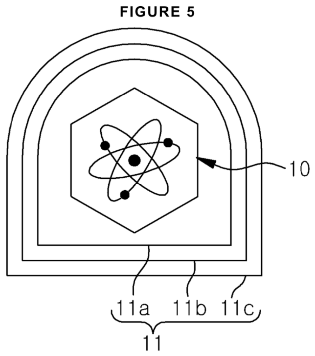

At this time, as shown in FIG. 5, the shielding member (11) may be composed of an alpha-ray shielding layer (11a) made of, for example, paper; a beta-ray shielding layer (11b) made of, for example, thin metal; and a gamma-ray shielding layer (11c) made of, for example, lead or steel, thereby enabling reliable prevention of radioactive leakage.

In addition, the nuclear reactor (10) is disposed in a separate sealed compartment (110) within the hull (100) to restrict access.

The turbine (20) of the present invention is installed inside the hull (100) and connected to the nuclear reactor (10), and rotates by an impact force and a reaction force generated when steam collides therewith.

The turbine (20) may be of any conventional structure or type capable of rotating by an impact force and a reaction force generated when steam from the nuclear reactor (10) collides therewith, and thus a detailed description of the turbine (20) is omitted.

Meanwhile, the turbine (20) is mounted on the spin shaft (31) of the gyroscopic stabilizer (30), which will be described below.

Therefore, the rotation of the turbine (20) causes the spin shaft (31) of the gyroscopic stabilizer (30) and the rotor (32) supported thereby to rotate, enabling the precessional motion of the gyroscopic stabilizer (30).

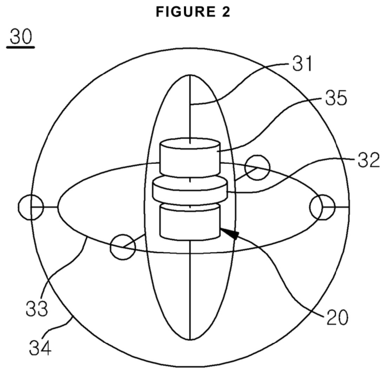

At this time, as shown in FIG. 2, the gyroscopic stabilizer (30) is disposed inside the hull (100) and comprises a rotor (32) rotating about a spin shaft (31), a gimbal (33) rotatably supporting the spin shaft (31), and a frame (34) rotatably supporting the gimbal (33), wherein the precessional motion suppresses tilting of the hull (100).

Here, the gyroscopic stabilizer (30) comprises a generator (35) mounted on the spin shaft (31), so that as the spin shaft (31) and rotor (32) rotate by the turbine (20), the generator (35) operates to generate electric power.

And the gyroscopic stabilizer (30) comprises a steam inlet line (36).

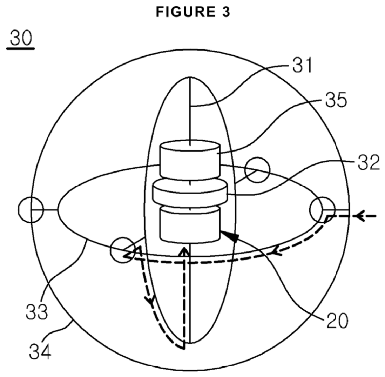

The steam inlet line (36) provided in the gyroscopic stabilizer (30) extends from the nuclear reactor (10) through the frame (34) and the gimbal (33) to the turbine (20), so that as shown in FIG. 3, steam generated from the nuclear reactor (10) flows through the steam inlet line (36) into the turbine (20), causing the turbine (20) to rotate.

And the gyroscopic stabilizer (30) further comprises a power supply line (37).

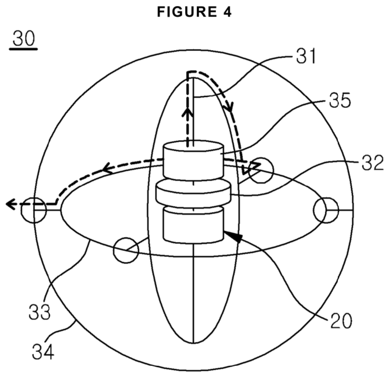

The power supply line (37) provided in the gyroscopic stabilizer (30) extends from the generator (35), through the gimbal (33) and the frame (34), to a propulsion motor (120) of the hull (100). As shown in FIG. 4, the power generated by the generator (35) is supplied to the propulsion motor (120), thereby enabling rotation of the drive shaft of the propulsion motor (120), which in turn rotates a propeller (150) coupled to the drive shaft, thus achieving propulsion.

At this time, a switchboard (130) and an inverter/converter (140) are provided between the power supply line (37) of the gyroscopic stabilizer (30) and the propulsion motor (120) of the hull (100), so that power distribution can be performed by the switchboard (130), and power conversion can be carried out by the inverter/converter (140).

Meanwhile, the gyroscopic stabilizer (30) is disposed, together with the nuclear reactor (10), in a separate sealed compartment (110) within the hull (100), thereby restricting access.

Additionally, the nuclear-powered ship (A) with improved restoring force according to the present invention may further comprise an auxiliary generator (40).

In this case, the auxiliary generator (40) may be driven by the waste heat of the steam after the operation of the turbine (20), thereby enabling the utilization of the steam waste heat.

Such an auxiliary generator (40) may be of any conventional structure and method capable of generating electricity by being driven by the waste heat of steam after the operation of the turbine (20), and therefore, a detailed description of the auxiliary generator (40) will be omitted.

In addition, the nuclear-powered ship (A) with improved restoring force according to the present invention may further comprise an auxiliary turbine (50).

In this case, the auxiliary turbine (50) may be involved in the propulsion of the hull (100) and the generation of power within the hull (100), thereby facilitating smoother propulsion of the hull (100) and more efficient power generation within the hull (100).

That is, the auxiliary turbine (50) is connected to the propeller (150) shaft of the hull (100), so that the rotation of the auxiliary turbine (50) causes the propeller (150) to rotate, thereby enabling propulsion of the hull (100). In addition, the auxiliary turbine (50) is connected to a separate generator (35) other than the generator (35) mounted on the gyroscopic stabilizer (30), for example, the auxiliary generator (40) described above, so that the rotation of the auxiliary turbine (50) drives the auxiliary generator (40), thereby enabling additional power generation.

Such an auxiliary turbine (50), like the turbine (20) described above, may be of any conventional structure or type capable of rotating by an impact force and a reaction force generated when steam from the nuclear reactor (10) collides therewith, and thus a detailed description of the auxiliary turbine (50) is omitted.

The improvement in restoring force achieved by the nuclear-powered ship (A) with improved restoring force according to the present invention will be described in detail as follows.

The present invention comprises a nuclear reactor (10) disposed inside a hull (100) configured to generate steam from thermal energy produced during a nuclear fission process, and a turbine (20) installed inside the hull (100) and connected to the nuclear reactor (10), the turbine (20) being rotated by an impact force and a reaction force generated when the steam collides therewith, and further comprises a gyroscopic stabilizer (30) disposed inside the hull (100).

Therefore, when tilting occurs during the operation of the hull (100), the rotor (32) disposed on the spin shaft (31) of the gyroscopic stabilizer (30) rotates and undergoes precessional motion, thereby suppressing the tilting of the hull (100). As a result, not only can the restoring force of the ship be improved, but the effects of shaking and vibration occurring inside the hull (100) can also be reduced. However, since the operation of the gyroscopic stabilizer (30) requires electric power, additional costs and inconvenience may arise due to the need for a separate power supply system.

However, in the present invention, the turbine (20) is specifically mounted on the spin shaft (31) of the gyroscopic stabilizer (30), so that the rotational force of the turbine (20), which rotates by steam generated from the nuclear reactor (10), is transmitted to the spin shaft (31) of the gyroscopic stabilizer (30), causing the rotor (32) to rotate and perform precessional motion. Therefore, the costs and inconveniences associated with providing a separate power supply for operating the gyroscopic stabilizer (30) can be reduced.

At this time, the gyroscopic stabilizer (30) comprises a steam inlet line (36) extending from the nuclear reactor (10) through the frame (34) and the gimbal (33) to the turbine (20), so that steam generated from the nuclear reactor (10) flows through the steam inlet line (36) into the turbine (20), causing the turbine (20) to rotate.

Moreover, the nuclear-powered ship (A) with improved restoring force according to the present invention can ensure smooth power supply within the hull (100).

That is, the gyroscopic stabilizer (30) of the present invention comprises a generator (35) mounted on the spin shaft (31), so that as the spin shaft (31) and rotor (32) rotate by the turbine (20), the generator (35) operates, thereby generating electric power and enabling smooth power supply within the hull (100).

Here, the gyroscopic stabilizer (30) comprises a power supply line (37) extending from the generator (35), through the gimbal (33) and the frame (34), to the propulsion motor (120) of the hull (100). The electric power generated by the generator (35) is supplied to the propulsion motor (120), causing rotation of the motor's shaft, which in turn rotates the propeller (150) coupled to the motor shaft, thereby enabling propulsion of the ship.

In addition, the nuclear-powered ship (A) with improved restoring force according to the present invention can utilize the waste heat of steam after driving the turbine (20).

That is, the nuclear-powered ship (A) with improved restoring force according to the present invention may further comprise an auxiliary generator (40), wherein the auxiliary generator (40) is operated by the waste heat of steam after driving the turbine (20), thereby utilizing the steam waste heat after turbine (20) operation to generate electric power.

Moreover, the nuclear-powered ship (A) with improved restoring force according to the present invention can achieve enhanced propulsion of the hull (100) and more efficient power generation within the hull (100).

That is, the nuclear-powered ship (A) with improved restoring force according to the present invention may further comprise an auxiliary turbine (50). As the auxiliary turbine (50) rotates while connected to the propeller (150) shaft of the hull (100), propulsion of the hull (100) can be achieved. Additionally, when the auxiliary turbine (50) rotates while connected to a separate generator (35) other than the generator (35) mounted on the gyroscopic stabilizer (30), for example, the auxiliary generator (40) described above, additional power generation can be performed, thereby further enhancing propulsion of the hull (100) and power generation within the hull (100).

The present invention as described above is not limited to the aforementioned embodiments and may be modified within the scope that does not depart from the gist of the invention claimed in the claims, and such modifications shall fall within the scope of protection defined by the following claims.

### [Explanation of Reference Numerals]

| | | | |
|---|---|---|---|
| 10: | a turbine | 11: | a shielding member |
| 11a: | an alpha-ray shielding layer | 11b: | a beta-ray shielding layer |
| 11c: | a gamma-ray shielding layer | 20: | a turbine |
| 30: | a gyroscopic stabilizer | 31: | a spin shaft |
| 32: | a rotor | 33: | a gimbal |
| 34: | a frame | 35: | a generator |
| 36: | a steam inlet line | 37: | a power supply line |
| 40: | an auxiliary generator | 50: | an auxiliary turbine |
| 100: | a hull | 110: | a sealed compartment |
| 120: | a propulsion motor | 130: | a switchboard |
| 140: | an inverter/converter | 150: | a propeller |
| A: | nuclear-powered ship | | |

### Industrial Applicability

The present invention involves driving a turbine by steam generated from a nuclear reactor, and operating a gyroscopic stabilizer and a generator installed thereon by the turbine's operation, thereby not only enhancing hull stability by suppressing hull tilting via the gyroscopic stabilizer but also enabling smooth power supply within the hull through power generation by the generator, thus having industrial applicability in the field of nuclear-powered ship production.

## Claims

1. A nuclear-powered ship with improved stability, comprising;
a nuclear reactor disposed inside a hull and configured to generate steam from thermal energy produced during a nuclear fission process;
a turbine installed in the hull and connected to the nuclear reactor, the turbine being rotated by an impact force and a reaction force generated when the steam collides therewith; and
a gyroscopic stabilizer disposed inside the hull and configured to suppress tilting of the hull by a precessional motion of a frame that rotatably supports a gimbal, the gimbal rotatably supporting a spin shaft, and a rotor rotating about the spin shaft,
wherein the turbine is mounted on the spin shaft of the gyroscopic stabilizer to transmit rotational force to the spin shaft, and wherein the gyroscopic stabilizer comprises a generator mounted on the spin shaft, the generator being activated by rotation of the spin shaft and the rotor caused by the turbine to generate electric power.

2. The nuclear-powered ship with improved stability according to claim 1, wherein the gyroscopic stabilizer comprises a steam inlet line extending from the nuclear reactor, through the frame and the gimbal, to the turbine.

3. The nuclear-powered ship with improved stability according to claim 1, wherein the gyroscopic stabilizer comprises a power supply line extending from the generator, through the gimbal and the frame, to a propulsion motor of the hull.

4. The nuclear-powered ship with improved stability according to claim 1, wherein the nuclear reactor is surrounded by a shielding member to prevent radiation leakage.

5. The nuclear-powered ship with improved stability according to claim 1, wherein the nuclear reactor and the gyroscopic stabilizer are disposed in a separate sealed compartment within the hull.

6. The nuclear-powered ship with improved stability according to claim 1, further comprising an auxiliary generator operated by waste heat of the steam after driving the turbine to generate electric power.

7. The nuclear-powered ship with improved stability according to claim 1, further comprising an auxiliary turbine that rotates by an impact force and a reaction force generated when steam from the nuclear reactor collides therewith, the auxiliary turbine configured to propel the hull and generate electric power within the hull.
